# EUROPEAN PATENT SPECIFICATION

(11) **EP 2 292 316 B1**
(45) Date of publication and mention of the grant of the patent: **29.08.2018**
(21) Application number: 09176505.7
(22) Date of filing: 19.11.2009
(51) Int. Cl.: B01D 53/94, B01J 23/44, B01J 23/46, B01J 29/10, B01J 29/24, B01J 29/46, B01J 29/70, F01N 3/08, F01N 3/20, F01N 3/035, F01N 3/10, F01N 13/00

(54) **APPARATUS FOR AFTER-TREATMENT OF EXHAUST FROM DIESEL ENGINE**
VORRICHTUNG ZUR NACHBEHANDLUNG VON ABGAS EINES DIESELMOTORS
APPAREIL DE POST-TRAITEMENT DU GAZ D'ÉCHAPPEMENT D'UN MOTEUR DIESEL

(30) Priority: 02.09.2009 KR 20090082666
(43) Date of publication of application: 09.03.2011
(73) Proprietor: HYUNDAI MOTOR COMPANY, Seoul 137-130 (KR)
(72) Inventor: Choung, Jin Woo, 463-010, Seongnam-si (KR)
(74) Representative: Viering, Jentschura & Partner mbB Patent- und Rechtsanwälte

(56) References cited:
- EP-A1- 1 224 969
- EP-A1- 2 112 339
- WO-A1-2009/044495
- JP-A- 2004 138 022
- US-A1- 2007 277 507
- US-A1- 2009 038 297

## Description

### BACKGROUND OF THE INVENTION

### Field of the Invention

The present invention relates to an apparatus for after-treatment of exhaust gas from a diesel engine according to the preamble of claim 1. In particular, the present invention relates to an apparatus for after-treatment of exhaust from a diesel engine, which includes a Diesel Oxidation Catalyst (DOC) having a carrier, which contains a single active material composed of Ru or a composite active material composed of specific weight ratios of Pt and Ru.

### Description of Related Art

Certain compounds in the exhaust stream of a combustion process are undesirable in that their release into the environment would contribute to lower air quality. As a result, they must be controlled in order to protect the environment and to meet or exceed government emission regulations. Among such undesirable compounds are nitrogen oxides, which will be referred to as NOx. There are a wide variety of combustion processes that produce NOx, such as coal or oil furnaces, reciprocating internal combustion engines (including gasoline and diesel engines), and gas turbine engines.

In order to remove pollutants (e.g., NOx, CO, and hydrocarbons) from the exhaust stream of an engine, three-way catalytic converters (i.e., catalytic converters having three-way catalysts) have been provided in gasoline engine vehicles. In most cases, the vehicle engines operate in a stoichiometric mode; i.e., stoichiometric amounts of fuel and air are fed into the engines. After combustion, the pollutants in the exhaust stream generally contain hydrocarbons, CO, and NOx. The three-way catalysts can remove approximately 95% or more of the pollutants by reducing NOx into N₂ and O₂ and by oxidizing CO into CO₂ and hydrocarbons into CO₂ and H₂O using O₂, part of which is produced from the reduction and part of which is present in the exhaust, as a reducing agent.

Lean-burn engines typically operate in a fuel-lean mode; i.e., a more than stoichiometric amount of air is fed with fuel into the engine cylinders. Compared with stoichiometric engines, lean-burn engines offer superior fuel economy. One typical example of a lean-burn engine is a diesel engine. However, since the exhaust stream from the lean-burn engines contains excessive amounts of NOx and O₂, the three-way catalytic converters are inadequate in converting NOx to N₂ and reducing NOx emissions to a desirable level. As a result, in order to reduce NOx in the exhaust from the lean bum engines, an exhaust purifying system is required, which is different from the systems used in stoichiometric engines.

Specifically, one example of an exhaust purifying system for the lean-burn diesel engine generally includes a Diesel Particulate Filter (DPF), a Diesel Oxidation Catalyst (DOC), and a Selective Catalyst Reduction (SCR) catalyst. The DPF is located most upstream of an exhaust pipe connected to an engine exhaust manifold, and serves to trap particulate matter. The DOC is located downstream of the DPF, and serves to oxidize hydrocarbons, CO, and Soluble Organic Fraction (SOF) of the particulate matter, which are contained in the exhaust stream, into CO₂ and H₂O. The SCR catalyst is located downstream of the DOC, and serves to reduce NOx into N₂ using ammonia as a reducing agent. The SCR catalyst is made of V₂O₅/TiO₂, Pt/Al₂O₃, or Zeolite, and purifies NOx in the exhaust by chemical reaction of ammonia, which is injected thereto or is produced by decomposition of an injected urea solution.

The following description will discuss, in more detail, the treatment of the exhaust by the exhaust purifying system for a lean-burn diesel engine. First, the exhaust from the diesel engine contains large amounts of O₂ and NOx. NOx is mainly composed of NO₂ and NO, and the content of NO is about 30 percent or more by volume of NOx. The exhaust from the diesel engine primarily passes through the DPF, so that the particulate matter (e.g., soot chiefly composed of charcoal) is adsorbed on the DPF. After having passed through the DPF, the exhaust passes through the DOC, which is constructed by coating Pt or Pd, contained in an Al₂O₃ carrier, on a honeycomb-like ceramic substrate. In the DOC, oxidation of CO and hydrocarbons is a main process. In the oxidation, direct use of O₂, present in the exhaust, competes with indirect use of O₂, produced from the process of reducing NO₂ into NO, as a reducing agent. When the exhaust has passed through the DOC, the content of NO₂ among NOx in the exhaust is 20 percent or less in volume based on the weight of NOx whereas the content of NO relatively increases. After having passed through the DOC, the exhaust passes through the ammonia SCR catalyst made of zeolite. The ammonia SCR catalyst has competitive reactions of converting NO₂ and NO into harmless N₂ gas using ammonia as a reducing agent. In general, the reaction of reducing NO₂ is more prevalent. In particular, it is known that the ability of the ammonia SCR catalyst to remove NOx can be maximized due to a synergy effect if the volume ratio (i.e., mole ratio) of NO₂ to NO is on the order of 1:1.

However, the problem of a typical exhaust purifying system for a diesel engine is that the ability of the ammonia SCR catalyst to remove NOx declines since NO₂ is smaller than NO by volume fraction of NOx in the exhaust entering the ammonia SCR catalyst.

The information disclosed in this Background of the Invention section is only for enhancement of understanding of the general background of the invention and should not be taken as an acknowledgement or any form of suggestion that this information forms the prior art already known to a person skilled in the art.

However, an apparatus of the initially-mentioned type, that is, an apparatus for after-treatment of exhaust gas from a diesel engine according to the preamble of claim 1, is known from, e.g., US 2007/277507 A1.

Further, US 2009/0038297 A1 discloses a ceramic catalyst for NOx oxidation and NOx conversion in emission control systems.

### BRIEF SUMMARY OF THE INVENTION

The present invention provides an apparatus for after-treatment of exhaust from a diesel engine according to claim 1, which can efficiently remove pollutants such as hydrocarbons and CO in the exhaust emitted from the engine, naturally regenerate a Diesel Particulate Filter (DPF) by burning off particulate matter in the DPF, and maximize the ability of an ammonia Selective Catalyst Reduction (SCR) catalyst to remove NOx by increasing the amount of NO₂ among NOx in the exhaust entering the ammonia SCR catalyst. Further embodiments of the apparatus for after-treatment of exhaust from a diesel engine according to the present invention are described in dependent claims 2 to 8.

According to the present invention, the apparatus for after-treatment of exhaust gas from a diesel engine includes a DPF which may be located most upstream of an exhaust pipe connected to an engine exhaust manifold, a DOC located downstream of the DPF, and an SCR catalyst located downstream of the DOC, wherein the ammonia SCR catalyst is made of zeolite. The DOC has a carrier containing a single active material of Ru or a composite active material of Pt and Ru, and the weight ratio of Pt to Ru being 2:1 or less.

The DPF has an oxidation catalyst coated on a surface thereof, e.g. on the entire surfaces thereof. The oxidation catalyst is composed of Pt and Pd, with a weight ratio of Pt to Pd being in the range from 2:1 to 6:1. As a result, the oxidation catalyst of the DPF can lessen the load of the DOC, located downstream of the DPF, while improving the efficiency of the natural regeneration of the DPF by oxidizing NO in the exhaust gas into NO₂.

The ammonia SCR catalyst may be made of zeolite, which is ion exchanged with transition metals, particularly, Fe and/or Cu. When ion-exchanged with Fe and/or Cu among the transition metals, the zeolite has excellent ability to remove NOx, and in addition, can remove hydrocarbons or CO by oxidation or absorption.

According to exemplary embodiments of the present invention, the apparatus for after-treatment of exhaust from a diesel engine includes the DOC having a carrier, which contains a single active material composed of Ru or a composite active material composed of specific weight ratios of Pt and Ru. Thereby, the apparatus can efficiently remove pollutants such as hydrocarbons and CO in the exhaust emitted from the engine, naturally regenerate the DPF by burning off particulate matter in the DPF, and maximize the ability of the ammonia SCR catalyst to remove NOx by increasing the amount of NO₂ among NOx in the exhaust entering the ammonia SCR catalyst.

In addition, if the DPF is located most upstream of the exhaust pipe connected to the engine exhaust manifold and is provided adjacent to the engine exhaust manifold, it can be naturally regenerated by NO₂ in the exhaust from the engine. Furthermore, improved natural regeneration can be realized by oxidizing NO into NO₂ using the oxidation catalyst coated on the entire surfaces of the DPF.

The apparatus of the present invention has other features and advantages which will be apparent from or are set forth in more detail in the accompanying drawings, which are incorporated herein, and the following Detailed Description of the Invention, which together serve to explain certain principles of the present invention.

### BRIEF DESCRIPTION OF THE DRAWINGS

FIG. 1 is a graph illustrating the efficiency of CO oxidation and the activation temperature of a Diesel Oxidation Catalyst (DOC) with respect to the composition ratio of Pt and Ru; and
FIG. 2 is a graph illustrating the efficiency of NO oxidation of a DOC with respect to the composition ratio and the reaction temperature of Pt and Ru.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION OF THE INVENTION

Reference will now be made in detail to various embodiments of the present invention examples of which are illustrated in the accompanying drawings and described below. While the invention will be described in conjunction with exemplary embodiments, it will be understood that present description is not intended to limit the invention to those exemplary embodiments.

The present invention relates to an apparatus for after-treatment of exhaust from a diesel engine, which can efficiently remove pollutants such as hydrocarbons and CO in the exhaust emitted from the engine, naturally regenerate a Diesel Particulate Filter (DPF) by burning off particulate matter in the DPF, and maximize the ability of an ammonia Selective Catalyst Reduction (SCR) catalyst to remove NOx by increasing the amount of NO₂ among NOx in the exhaust entering the ammonia SCR catalyst.

The apparatus for after-treatment of exhaust from a diesel engine in accordance with an exemplary embodiment of the invention includes the DPF, the DOC, and the ammonia SCR catalyst. The DPF is located most upstream of an exhaust pipe connected to an engine exhaust manifold and is provided adjacent to the engine exhaust manifold. The DOC is located downstream of the DPF, and the ammonia SCR is located downstream of the DOC. The ammonia SCR is made of zeolite.

The following description will discuss individual components of the apparatus for after-treatment of exhaust from a diesel engine in accordance with an exemplary embodiment of the invention.

### Diesel Engine

The diesel engine generally operates in a fuel-lean mode that has a low fuel-to-air ratio. Exhaust from the diesel engine contains greater amounts of O₂ and NOx than those present in the exhaust from an engine, which operates at a theoretical fuel-to-air ratio. In the exhaust from the diesel engine, NO₂ is about 30 percent by volume of NOx.

### Diesel Particulate Filter (DPF)

The DPF is located most upstream of the exhaust pipe connected to the engine exhaust manifold and is provided adjacent to the engine exhaust manifold. The DPF can significantly reduce the amount of soot emitted from a diesel engine by physically trapping particulate matter in the diesel exhaust. In addition, after the vehicle has been driven for a predetermined number of miles or more, the DPF can be regenerated by burning off the trapped particulate matter by raising the temperature of the exhaust above the burning temperature of the particulate matter through post injection. To effectively burn off the particulate matter directly using O₂, a temperature of about 550 °C must be reached. In the apparatus for after-treatment of exhaust from a diesel engine in accordance with an exemplary embodiment of the invention, the DPF can be naturally regenerated by NO₂ in the exhaust from the diesel engine. In the exhaust from a diesel engine, NO₂ is 30 percent or more by volume of NOx. NO₂ is converted into NO by burning off charcoal (i.e., the major ingredient of the particulate matter) at a temperature of about 300°C. In particular, the DPF can preferably be provided adjacent to the engine exhaust manifold since the heat of the exhaust gas can promote the natural regeneration of the DPF by NO₂.

In addition, an oxidation catalyst is coated on the surface, preferably, on the entire surfaces of the DPF. The oxidation catalyst can lessen the load of the DOC, located downstream of the DPF, by oxidizing hydrocarbons. The oxidation catalyst can also improve the efficiency of the natural regeneration of the DPF since the temperature of the exhaust gas rises due to the oxidation of hydrocarbons. The oxidation catalyst coated on the surface of the DPF contains Pt and Pd, with a weight ratio of Pt to Pd in the range from 2:1 to 6:1. In this case, the oxidation catalyst can also oxidize NO in the exhaust gas into NO₂ and thereby maximize the efficiency of the natural regeneration of the DPF by NO₂.

### Diesel Oxidation Catalyst (DOC)

The DOC is located downstream of the DPF and is implemented with a carrier containing a single active material or a composite active material. The single active material is composed of Ru, and the composite active material is composed of Pt and Ru, with a weight ratio of Pt to Ru being 2:1 or less.

A typical DOC is configured such that Pt or Pd contained in an Al₂O₃ carrier is coated on a honeycomb-like ceramic substrate. In the DOC, oxidation of CO and hydrocarbons is a main process. In the oxidation, direct use of O₂, present in the exhaust, competes with indirect use of O₂, produced in the process of reducing NO₂ into NO, as a reducing agent. After the exhaust has passed through the DOC, the content of NO₂ among NOx in the exhaust is 20 percent or less by volume based on the weight of NOx whereas the content of NO relatively increases. This, as a result, lowers the efficiency of the ammonia SCR catalyst that removes NOx in the next process.

The active material of the DOC in accordance with an exemplary embodiment of the invention can be composed of only Ru or be composed of both Pt and Ru, with a weight ratio of Pt to Ru being 2:1 or less. The active material of the DOC can increase the yield of NO₂ by limiting the oxidation of CO and hydrocarbons while relatively promoting the oxidation of NO into NO₂. The carrier of the DOC can be made of any materials, which are porous and have a high surface area. For example, the carrier of the DOC can be made of Al₂O₃. In addition, the active material can preferably be 0.5 to 5 percent by weight of the DOC. If the content of the active material is less than 0.5 weight percent, the efficiency of oxidation of the DOC may be insignificant. If the content of the active material exceeds 5 weight percent, the active material may be lost in the manufacturing process and an increase in the efficiency of oxidation is insignificant.

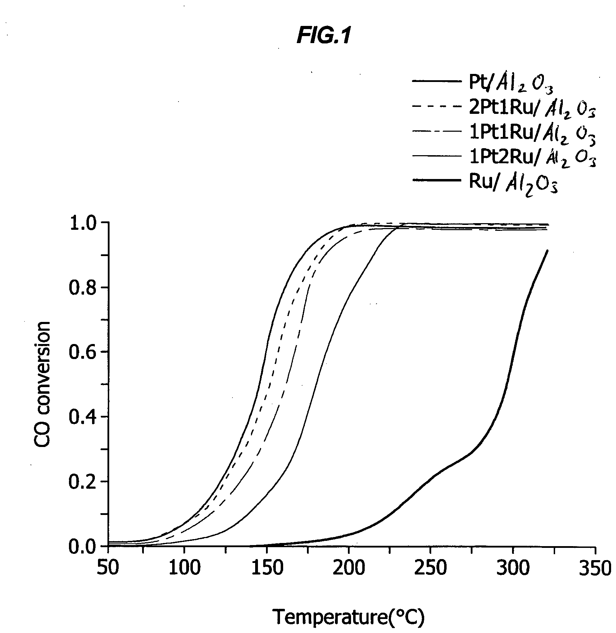

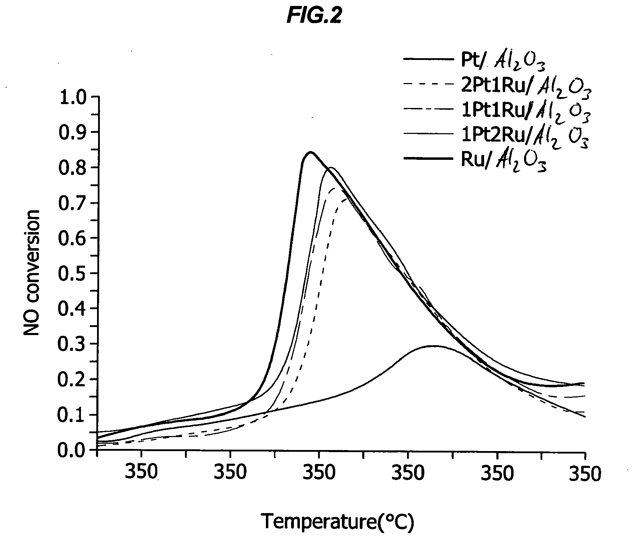

FIG. 1 is a graph illustrating the efficiency of CO oxidation and the activation temperature of a DOC with respect to the composition ratio of Pt and Ru, and FIG. 2 is a graph illustrating the efficiency of NO oxidation of a DOC with respect to the composition ratio and the reaction temperature of Pt and Ru. In addition, Table 1 below represents the Light-Off Temperatures (LOTs) of the DOC, the maximum conversion efficiencies from NO to NO₂, and the reaction temperatures showing the maximum conversion efficiencies according to the weight ratios between Pt and Ru. As can be seen in FIG. 1 and Table 1, the LOT of the DOC rises in proportion to the content of Ru, in which the temperature is highest if only Ru is present. In addition, as can be seen in FIG.2 and Table 1, as the content of Ru increases, the maximum conversion efficiency from NO to NO₂ increases and the temperature indicating the maximum conversion efficiency decreases. If only Ru is present, a maximum amount of NO₂ is produced in the lowest reaction temperature. As a result, the apparatus for after-treatment of exhaust from a diesel engine in accordance with an exemplary embodiment of the invention can supply exhaust gas containing a higher percent of NO₂ by volume (or mole) of NOx to the ammonia SCR catalyst.

**Table 1**

| Weight ratio of Pt and Ru | LOT (°C) | Max conversion efficiency from NO to NO₂ (Volume %) | Reaction temp at max conversion efficiency from NO to NO₂ (°C) |
|---|---|---|---|
| Pt/Al₂O₃ | 142 | 30 | 430 |
| 2Pt1Ru/Al₂O₃ | 148 | 71 | 330 |
| 1Pt1Ru/Al₂O₃ | 158 | 75 | 320 |
| 1Pt2Ru/Al₂O₃ | 178 | 80 | 310 |
| Ru/Al₂O₃ | 294 | 85 | 290 |

In the case where the diesel engine operates in a fuel-lean mode, the contents of CO and hydrocarbons in exhaust from a diesel engine are smaller than those in exhaust from a diesel engine, which operates at a theoretical air/fuel ratio. As a result, even if the oxidation reaction of CO and hydrocarbons by the DOC in accordance with an exemplary embodiment of the invention is limited when compared to that by a common DOC, desirable amounts of CO and hydrocarbons can be removed through the oxidation by the oxidation catalyst coated on the entire surfaces of the DPF and through oxidation and adsorption by the ammonia SCR catalyst, which will be described later.

### Ammonia Selective Catalyst Reduction (SCR) Catalyst

The ammonia SCR catalyst is located downstream of the DOC, and is made of zeolite. The ammonia SCR catalyst is a catalyst that can reduce NOx, in exhaust from a diesel engine, into N₂ using ammonia as a reducing agent. Herein, the ammonia can be directly supplied in the form of ammonia gas or be produced through decomposition of an injected urea solution.

The ammonia SCR catalyst has competitive reactions of converting NO₂ and NO into harmless N₂ gas using ammonia as a reducing agent. In general, the reaction of reducing NO₂ is more prevalent. In particular, it is known that the ability of the ammonia SCR catalyst to remove NOx can be maximized due to a synergy effect if the volume ratio (i.e., mole ratio) of NO₂ to NO is on the order of 1:1. The apparatus of after-treatment for exhaust from a diesel engine in accordance with an exemplary embodiment of the invention can supply the exhaust, with a volume ratio of NO₂ to NO being closer to 1, to the ammonia SCR catalyst. As a result, apparatus of after-treatment of this embodiment can maximize the efficiency of ammonia SCR catalyst to remove NOx when compared to a common apparatus of after-treatment for exhaust from a diesel engine.

The zeolite of the ammonia SCR catalyst has advantageous properties such as high temperature durability and resistance to SO₂ oxidation. In detail, available examples of the zeolite may include mordenite zeolite, MFI-type zeolite (e.g., ZSM5), BEA zeolite, Y-type zeolite, etc. The ammonia SCR catalyst can preferably be made of zeolite, which is ion exchanged with transition metal. Available transition metals may include, but not limited to, Fe, Ni, Co, Cu, etc. When ion-exchanged with transition metals, the zeolite has excellent ability to remove NOx, and in addition, can remove hydrocarbons or CO by oxidation or absorption. Zeolite ion-exchanged with Fe and/or Cu among the transition metals can maximize the ability of ammonia SCR catalyst to remove NOx and enlarge the range of active temperature to remove NOx. In addition, the transition metal of the ammonia SCR catalyst can preferably be 1 to 4 percent by weight of the zeolite. If the content of the transition metal is less than 1 weight percent, the effect of ion exchange with the transition metal may be insignificant. If the content of the transition metal exceeds 4 weight percent, the transition metal may be lost in the process of ion exchange and an increase in the ability to remove NOx is insignificant.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. An apparatus for after-treatment of exhaust gas from a diesel engine, comprising:
a diesel particulate filter (DPF);
a diesel oxidation catalyst (DOC) located downstream of the diesel particulate filter (DPF); and
an ammonia-selective catalyst reduction (SCR) catalyst located downstream of the diesel oxidation catalyst (DOC),
wherein the ammonia SCR catalyst is made of zeolite,
**characterized in that**
the diesel oxidation catalyst (DOC) includes a carrier containing a single active material of Ru or a composite active material of Pt and Ru, wherein a weight ratio of Pt to Ru is 2:1 or less,
wherein the active material of the DOC increases the yield of NO₂ by limiting the oxidation of CO and hydrocarbons while relatively promoting the oxidation of NO into NO₂,
wherein the diesel particulate filter (DPF) has an oxidation catalyst coated on a surface thereof,
wherein the oxidation catalyst coated on the surface of the diesel particulate filter includes Pt and Pd, and
wherein a weight ratio of Pt to Pd is in a range from 2:1 to 6:1.

2. The apparatus in accordance with claim 1, wherein the diesel particulate filter (DPF) has an oxidation catalyst coated on entire surfaces thereof.

3. The apparatus in accordance with claim 1, wherein the ammonia SCR catalyst is made of zeolite, which is ion exchanged with transition metal.

4. The apparatus in accordance with claim 3, wherein weight of transition metal is 1 to 4 percent of weight of the zeolite.

5. The apparatus in accordance with claim 3, wherein the zeolite includes mordenite zeolite, MFI-type zeolite (e.g., ZSM5), BEA zeolite, or Y-type zeolite.

6. The apparatus in accordance with claim 3, wherein the zeolite is ion exchanged with at least one of Fe, Ni, Co, and Cu.

7. The apparatus in accordance with claim 1, wherein the carrier of the diesel oxidation catalyst (DOC) includes Al₂O₃, and the active material is 0.5 to 5 percent by weight of the diesel oxidation catalyst (DOC).

8. The apparatus in accordance with claim 7, wherein the carrier of the diesel oxidation catalyst (DOC) is porous.

## Patentansprüche

1. Eine Vorrichtung zur Nachbehandlung von Abgas von einem Dieselmotor, aufweisend:
einen Dieselpartikelfilter (DPF),
einen Dieseloxidationskatalysator (DOC), welcher stromabwärts vom Dieselpartikelfilter (DPF) angeordnet ist, und
einen Ammoniak-Selektiv-Katalytische-Reduktion-(SCR)-Katalysator, welcher stromabwärts vom Dieseloxidationskatalysator (DOC) angeordnet ist,
wobei der Ammoniak-SCR-Katalysator aus Zeolith gemacht ist,
**dadurch gekennzeichnet, dass**
der Dieseloxidationskatalysator (DOC) einen Träger aufweist, welcher ein einzelnes aktives Material von Ru oder ein aktives Verbundmaterial von Pt und Ru fasst, wobei ein Gewichtsverhältnis von Pt zu Ru 2:1 oder geringer ist,
wobei das aktive Material des DOC die Ausbeute von NO₂ steigert durch Beschränken der Oxidation von CO und Kohlenwasserstoffen während relativ betrachtet die Oxidation von NO zu NO₂ gefördert wird,
wobei der Dieselpartikelfilter (DPF) einen Oxidationskatalysator auf einer Oberfläche davon beschichtet hat,
wobei der Oxidationskatalysator, welcher auf die Oberfläche des Dieselpartikelfilters beschichtet ist, Pt und Pd aufweist, und
wobei ein Gewichtsverhältnis von Pt zu Pd in einem Bereich von 2:1 bis 6:1 liegt.

2. Die Vorrichtung gemäß Anspruch 1, wobei der Dieselpartikelfilter (DPF) einen Oxidationskatalysator auf einer gesamten Oberfläche davon beschichtet hat.

3. Die Vorrichtung gemäß Anspruch 1, wobei der Ammoniak-SCR-Katalysator aus Zeolith gemacht ist, welches mit einem Übergangsmetall ionenausgetauscht ist.

4. Die Vorrichtung gemäß Anspruch 3, wobei ein Gewicht des Übergansmetalls 1 bis 4 Prozent des Gewichts des Zeoliths ist.

5. Die Vorrichtung gemäß Anspruch 3, wobei das Zeolith Mordenit-Zeolith, MFI-artiges Zeolith (z.B. ZSM5), BEA-Zeolith oder Y-artiges Zeolith aufweist.

6. Die Vorrichtung gemäß Anspruch 3, wobei das Zeolith mit zumindest einem von Fe, Ni, Co und Cu ionenausgetauscht ist.

7. Die Vorrichtung gemäß Anspruch 1, wobei der Träger des Dieseloxidationskatalysators (DOC) Al₂O₃ aufweist und das aktive Material 0,5 bis 5 Gewichtsprozent des Dieseloxidationskatalysators (DOC) ist.

8. Die Vorrichtung gemäß Anspruch 7, wobei der Träger des Dieseloxidationskatalysators (DOC) porös ist.

## Revendications

1. Appareil de post-traitement de gaz d'échappement d'un moteur diesel, comprenant :
un filtre à particules diesel (DPF) ;
un catalyseur d'oxydation diesel (DOC) situé en aval du filtre à particules diesel (DPF) ; et
un catalyseur de réduction catalytique sélective (SCR) pour l'ammoniac situé en aval du catalyseur d'oxydation diesel (DOC),
dans lequel le catalyseur SCR sélectif pour l'ammoniac est constitué de zéolite,
**caractérisé en ce que**
le catalyseur d'oxydation diesel (DOC) comprend un support contenant un matériau actif unique de Ru ou un matériau actif composite de Pt et Ru, dans lequel un rapport en poids de Pt à Ru est 2:1 ou moins,
dans lequel le matériau actif du DOC augmente le rendement de NO₂ par limitation de l'oxydation de CO et d'hydrocarbures tout en favorisant relativement l'oxydation de NO en NO₂,
dans lequel le filtre à particules diesel (DPF) a un catalyseur d'oxydation revêtu sur une surface de celui-ci,
dans lequel le catalyseur d'oxydation revêtu sur la surface du filtre à particules diesel comprend Pt et Pd, et
dans lequel un rapport en poids de Pt à Pd est dans une plage de 2:1 à 6:1.

2. Appareil selon la revendication 1, dans lequel le filtre à particules diesel (DPF) comporte un catalyseur d'oxydation revêtu sur les surfaces entières de celui-ci.

3. Appareil selon la revendication 1, dans lequel le catalyseur SCR sélectif pour l'ammoniac est constitué de zéolite, qui est soumise à un échange d'ions avec un métal de transition.

4. Appareil selon la revendication 3, dans lequel le poids de métal de transition est de 1 à 4 pour cent du poids de la zéolite.

5. Appareil selon la revendication 3, dans lequel la zéolite comprend la zéolite mordénite, la zéolite de type MFI (par exemple, ZSM5), la zéolite BEA, ou la zéolite de type Y.

6. Appareil selon la revendication 3, dans lequel la zéolite est soumise à échange d'ions avec au moins l'un de Fe, Ni, Co et Cu.

7. Appareil selon la revendication 1, dans lequel le support du catalyseur d'oxydation diesel (DOC) comprend Al₂O₃, et le matériau actif est 0,5 à 5 pour cent en poids du catalyseur d'oxydation diesel (DOC).

8. Appareil selon la revendication 7, dans lequel le support du catalyseur d'oxydation diesel (DOC) est poreux.
